# EUROPEAN PATENT APPLICATION

(11) **EP 2 769 801 A1**
(43) Date of publication of application: **27.08.2014**
(21) Application number: 12820841.0
(22) Date of filing: 26.07.2012
(51) Int. Cl.: B23K 26/38, B23K 26/00, B23K 26/08, F21S 2/00

(54) **PROCESSING MACHINE**

(30) Priority: 21.10.2011 JP 2011232181
(71) Applicant: Kataoka Corporation, Kyoto-shi Kyoto 601-8203 (JP)
(72) Inventor: SUZUKI, Masami, Kyoto-shi Kyoto 601-8203 (JP); TOKUOKA, Satoshi, Kyoto-shi Kyoto 601-8203 (JP); MAEDA, Satoru, Kyoto-shi Kyoto 601-8203 (JP)
(74) Representative: TBK
(86) International application number: PCT/JP2012/068936
(87) International publication number: WO 2013/057995

(57) **Abstract**

A processing machine is configured to include a processing device capable of applying processing for forming many holes 32 to a processing area as a part of a region to be processed in a workpiece 3, a transferring device to relatively move the workpiece 3 with respect to the processing device after the processing is applied to a certain area in the region to be processed, and to position an unprocessed area as a new area to be processed by the processing device, a processing pattern storage unit to store information defining arrangement positions 31 of the holes 32 formed by the processing device, and a control unit to determine a target processing position of each of the holes 32 by adding a position correction amount of each hole 32 on a random basis to the position 31 of each hole 32 defined by the information stored in the processing pattern storage unit.

## Description

### TECHNICAL FIELD

The present invention relates to a processing machine that applies processing for forming innumerable holes to a region to be processed in a workpiece.

### BACKGROUND ART

A backlight that illuminates a display from behind requires surface light emission, and a light-guiding plate is used as a member therefor. The light-guiding plate has many microscopic projections and depressions that are formed by a dot pattern on a surface of a transparent plate body such as an acrylic. When a cold-cathode tube or an LED that serves as a light source is arranged on one end of the light-guiding plate and luminous flux is radiated from the light source to the other end of the light-guiding plate, light propagating through the light-guiding plate is diffused through the projections and depressions over a wide region of the light-guiding plate, and the uniform surface light emission can be realized.

In order to form the projections and depressions on the light-guiding plate, it is possible to use a die in which innumerable holes (dimples) are made in advance (refer to the following Patent document 1). By pressing a heated resin material against the die, many projections corresponding to the holes in the die are formed on the surface of the light-guiding plate made of resin.

Processing for making the many holes in the die for forming the light-guiding plate can be performed by using a laser processing machine. For example, a galvano scanner capable of freely controlling a direction of a laser optical axis (refer to the following Patent document 2) is used to drill the die and form the hole therein, by irradiating the position to form the hole with a laser beam.

The size of an area to be processed by the galvano scanner at a time, in other words, a scanning region of the laser beam is often smaller than the size of the die and also an area of the light-guiding plate. For this reason, the processing for forming the holes is applied to a part of the area in the die, with the die being supported by a transferring device such as an XY stage, and then the die is moved relatively with respect to the galvano scanner so as to position an unprocessed area to face against the galvano scanner. Thus, the laser processing and the transfer of the die are repeated to form the holes over the almost entire die.

When the die is manufactured by such a method, a pattern of the holes formed in a certain area may be slightly displaced from a pattern of the holes formed in an area adjacent to the certain area in a direction parallel to the surface of the die. Then, a boundary between the certain area and the adjacent area is visually made clear, and the boundary is also prominent in the light-guiding plate with the projections formed thereon, thus deteriorating the quality as a surface light emitting element.

### CITATION LIST

### PATENT DOCUMENTS

Patent document 1: Japanese Unexamined Patent Application Publication No. 2001-052519
Patent document 2: Japanese Unexamined Patent Application Publication No. 2009-297726

### SUMMARY OF INVENTION

### TECHNICAL PROBLEM

The present invention is to avoid the problem in which, when applying processing for forming innumerable holes to a region to be processed in a workpiece, a boundary between a certain area and an area adjacent to the certain area that are included in the region to be processed in the workpiece is made clear to the extent that the boundary is visible to the naked eye.

### SOLUTION TO PROBLEM

According to the present invention, a processing machine is configured to include a processing device capable of applying processing for forming many holes to a processing area as a part of a region to be processed in a workpiece, a transferring device to relatively move the workpiece with respect to the processing device after the processing is applied to a certain area in the region to be processed in the workpiece, and to position an unprocessed area adjacent to the area that is already processed as a new area to be processed by the processing device, a processing pattern storage unit to store information defining arrangement positions of the holes formed by the processing device in the region to be processed in the workpiece, and a control unit to determine a target processing position of each of the holes by adding a position correction amount of each hole on a random basis to the position of each hole defined by the information stored in the processing pattern storage unit, and to give an instruction to the processing device to form the hole at the target processing position.

Namely, as the positions where the respective holes are formed are randomly varied from one hole to another, a displacement between a pattern of the holes formed in the certain area and a pattern of the holes formed in the area adjacent to the certain area is made less prominent.

The processing device is typically a laser irradiation device to irradiate the position instructed by the control unit with a laser beam. It is preferable that the processing device includes a galvano scanner to change a direction of an optical axis of the projected laser beam.

It is especially preferable when the processing machine is applied to the case where a die for forming a light-guiding plate is manufactured by setting the region to be processed on one surface of the workpiece as the die and forming the many holes over the entire region to be processed.

### ADVANTAGEOUS EFFECTS OF INVENTION

According to the present invention, it is possible to avoid the problem in which, when applying processing for forming innumerable holes to a region to be processed in a workpiece, a boundary between a certain area and an area adjacent to the certain area that are included in the region to be processed in the workpiece is made clear to the extent that the boundary is visible to the naked eye.

### BRIEF DESCRIPTION OF DRAWINGS

Fig. 1 is a perspective view showing a laser processing machine according to an embodiment of the present invention;
Fig. 2 is a perspective view showing a laser irradiation device of the laser processing machine;
Fig. 3 is a view showing a structure of hardware resources of the laser processing machine;
Fig. 4 is a functional block diagram of the laser processing machine;
Fig. 5 is a plan view showing a die for forming a light-guiding plate that is processed by the laser processing machine;
Fig. 6 is an enlarged plan view showing an essential part of the die for forming the light-guiding plate that is processed by the laser processing machine; and

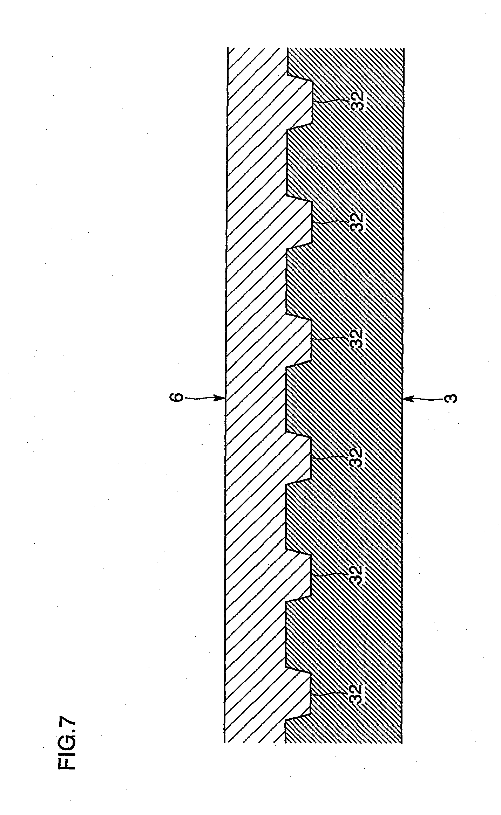

Fig. 7 is an enlarged side sectional view showing an essential part of the die processed by the laser processing machine and the light-guiding plate manufactured by using the die.

### DESCRIPTION OF EMBODIMENTS

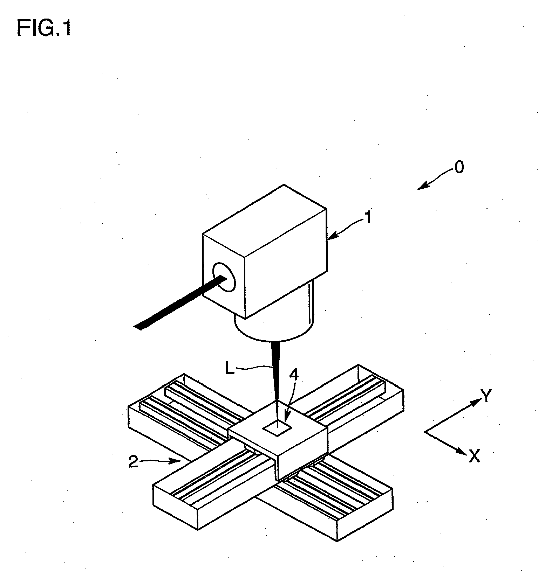

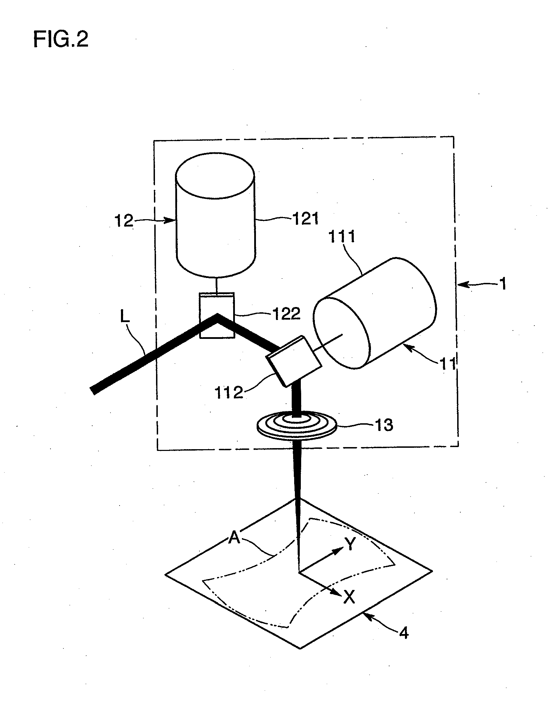

An embodiment of the present invention will be explained with reference to the drawings. As shown in Fig. 1 and Fig. 2, a processing machine 0 of this embodiment includes a mount 4 that supports a die 3 for forming a light-guiding plate as a workpiece, and a laser irradiation device 1 that irradiates a top surface of the die 3 arranged on the mount 4 with a laser beam L and serves as a processing device, and is able to apply laser processing for making holes 32 to freely-selected positions of the die 3.

The mount 4 supports the die 3 at the time of the laser processing. The mount 4 is supported by an XY stage 2 that serves as a transferring device. The XY stage 2 can relatively displace the mount 4 and the workpiece 3 with respect to the laser irradiation device 1 in an X-axis direction and/or a Y-axis direction.

As shown in Fig. 2, the laser irradiation device 1 includes a laser oscillator (not shown), galvano scanners 11 and 12 that scan the laser beam L oscillated from the laser oscillator, and a condensing lens 13 that condenses the laser beam L, and is able to irradiate freely-selected positions in a certain processing area extending in the X-axis direction and the Y-axis direction with the laser beam L.

The galvano scanners 11 and 12 rotate mirrors 112 and 122 that reflect the laser beam L by servomotors, stepping motors and the like that serve as optical axis operating mechanisms 111 and 121. When directions of the mirrors 112 and 122 are changed, the optical axis of the beam L can be displaced. Both of the X-axis galvano scanner 11 that changes the optical axis of the beam L in the X-axis direction and the Y-axis galvano scanner 12 that changes the optical axis of the beam L in the Y-axis direction are provided according to this embodiment, and hence an irradiation position of the beam L on the top surface of the mount 4 can be controlled two-dimensionally, that is, in the X-axis direction and the Y-axis direction.

The condensing lens 13 may be, for example, an Fθ lens.

The size of a processing area to be processed by the laser irradiation device 1 at a time, in other words, a scanning region of the laser beam by the galvano scanners 11 and 12 is usually narrower and smaller than a region to be processed in the die 3. In order to form the holes 32 over the entire region to be processed in the die 3, the laser processing for making a plurality of holes 32 is applied to a part of an area 30 in the die 3 with the die 3 being supported by the XY stage 2, and then the die 3 is moved relatively with respect to the galvano scanners 11 and 12 so as to position an unprocessed area 30 to face against the galvano scanners 11 and 12. Thus, it is necessary to repeat the laser processing and the transfer of the die 3.

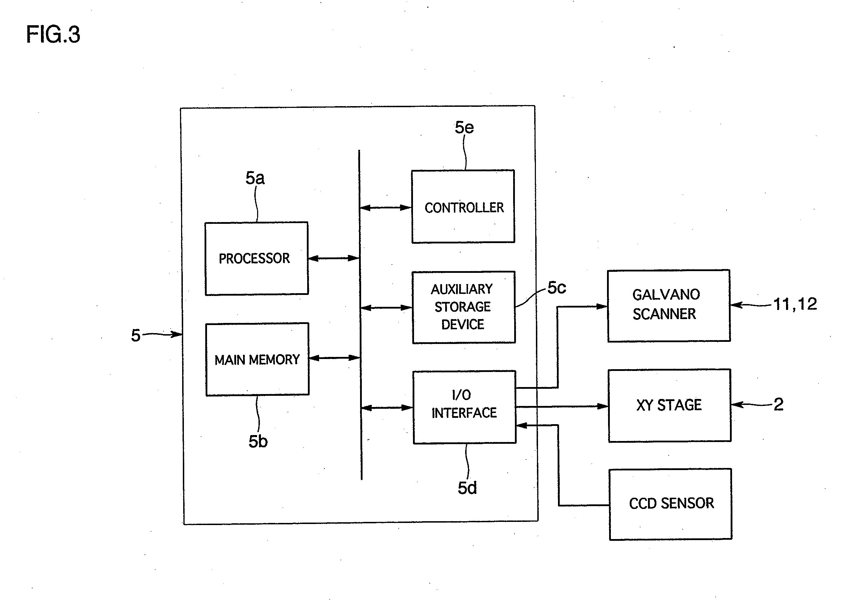

A control device 5 that controls the galvano scanners 11 and 12 and the XY stage 2 includes a processor 5a, main memory 5b, an auxiliary storage device 5c, an I/O interface 5d and the like as shown in Fig. 3, which are controlled by a controller 5e (a system controller, an I/O controller and the like) to operate in combination. The auxiliary storage device 5c may be a flash memory, a hard disk drive and the like. The I/O interface 5d may include a servo driver (servo controller).

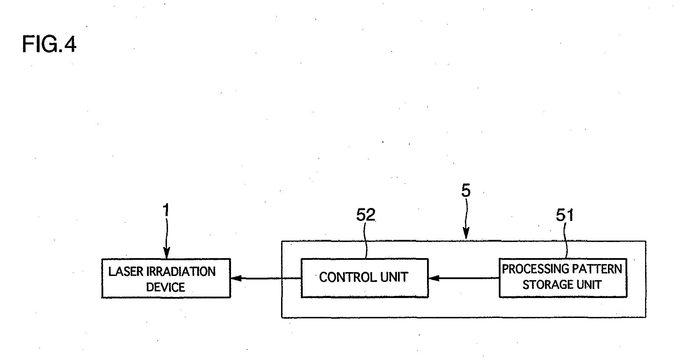

A program to be executed by the control device 5 is stored in the auxiliary storage device 5c and, when the program is executed, it is read into the main memory 5b and decoded by the processor 5a. According to the program, the control device 5 functions as a processing pattern storage unit 51 and a control unit 52 as shown in Fig. 4.

The processing pattern storage unit 51 stores information defining respective arrangement positions of the many holes 32 that are formed by the laser irradiation device 1 in the region to be processed in the die 3. The processing pattern storage unit 51 stores, as position data for processing, CAD data or the like that defines positions in the region to be processed in the die 3 to be irradiated with the laser beam L for forming the holes 32, or (x, y) coordinates of a plurality of points to be irradiated with the laser beam L at the time of the processing for forming the holes 32.

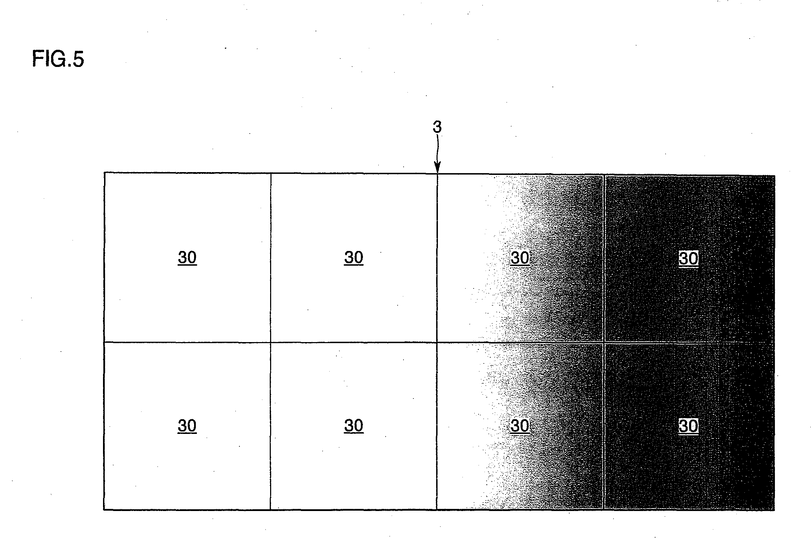

The respective holes 32 are basically arranged at intersections of or in squares of a lattice that is virtually set on the surface of the die 3. As shown in Fig. 5, density of the holes 32 (density of a dot pattern in which the plurality of holes 32 are concentrated, a number of the holes 32 per unit area) is the lowest at one end of the die 3 and becomes gradually higher toward the other end thereof, which appears as a gradation. This is caused by a property of the light-guiding plate 6 formed by using the die 3. Specifically, a light source is arranged at one end of the light-guiding plate 6 and luminous flux inputted from one end of the light-guiding plate 6 propagates through the light-guiding plate 6 toward the other end thereof. Based on this, it is necessary to provide the projections for diffusing the luminous flux sparsely as a distance from the light source decreases, and to provide the projections densely as the distance from the light source increases.

The control unit 52 controls the laser irradiation device 1 so that the irradiation position defined by the above-described position data for processing is irradiated with the laser beam L. The control unit 52 reads out the position data for processing to obtain coordinates (x, y) of a target irradiation position of the laser beam L for the respective holes 32. Then, it determines a correction amount in the X-axis direction Δx and a correction amount in the Y-axis direction Δy for the respective holes 32 on a random basis. Δx and Δy are random numbers or pseudorandom numbers computed based on a random function or a table of random numbers, respectively, and have positive values or negative values. An absolute value |Δx| of the correction amount Δx is up to one half of a separation distance between the adjacent holes 32 in the X-axis direction. Similarly, an absolute value |Δy| of the correction amount Δy is up to one half of a separation distance between the adjacent holes 32 in the Y-axis direction. Then, the random correction amounts Δx and Δy are added to the coordinates (x, y) defined in the position data for processing to obtain coordinates (x + Δx, y + Δy) as a target processing position where a hole 32 should be formed, and an instruction is given to the galvano scanners 11 and 12 so that the coordinates (x + Δx, y + Δy) is irradiated with the laser beam L.

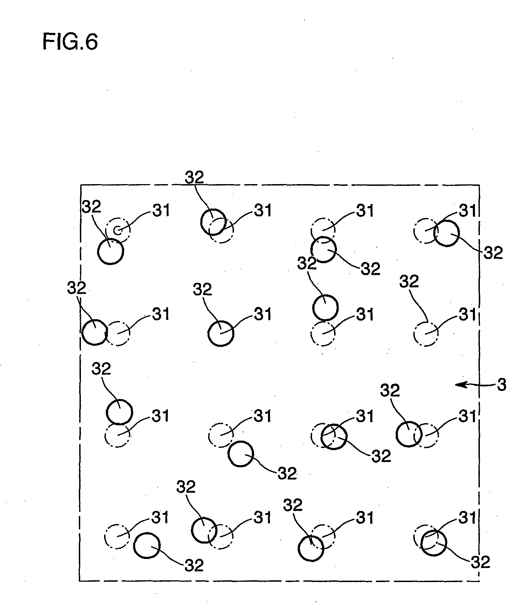

Fig. 6 illustrates a relationship between irradiation positions 31 defined in the position data for processing and irradiation positions 32 to which the laser beam L is actually projected in order to make the holes 32. As already described above, the irradiation positions 31 defined in the position data for processing are arranged at the intersections of or in the squares of the lattice that is virtually set on the surface of the die 3. Meanwhile, the positions of the actually-formed holes 32 are randomly deviated from the intersections or the squares of the virtual lattice.

Incidentally, the actually irradiation position of the laser beam L on the top surface of the die 3 is affected by a rotational positioning error of the galvano scanners 11 and 12. In addition, optical distortion of the condensing lens 13 is also caused. An error in the irradiation position of the laser beam L tends to increase as a distance from the center of a scanning region of the galvano scanners 11 and 12 increases. This is schematically illustrated with an alphabet A in Fig. 2. Therefore, it is necessary to remove such an error before irradiating the laser beam L.

Information for error calibration is stored in advance in the main memory 5b or the auxiliary storage device Sc in the control device 5. Specifically, observations on a position (x_{R}, y_{R}), where the laser beam L is actually projected when a control signal corresponding to a target irradiation position (x_{T}, y_{T}) is inputted to the galvano scanners 11 and 12, are carried out for the various target irradiation positions (x_{T}, y_{T}). Then, correction amounts (xₑ, yₑ) for each target irradiation position (x_{T}, yᵣ) that are determined based on an error between the target irradiation position (x_{T}, y_{T}) and a measured irradiation position (x_{R}, y_{R}) (so as to cancel the error) are associated with the respective target irradiation position (x_{T}, y_{T}) and stored.

The control unit 52 searches for the information for error calibration by using the coordinates (x + Δx, y + Δy) of a target processing position at which the hole 32 should be made as a key, and reads out the correction amounts (xₑ, yₑ) associated with the target processing position (x + Δx, y + Δy). When the correction amounts (xₑ, yₑ) directly associated with the target processing position (x + Δx, y + Δy) are not stored, it reads out a plurality of correction amounts associated with a plurality of coordinates that are close to the target processing position, and calculates appropriate correction amounts (xₑ, yₑ) by interpolation between them. Then, it inputs a control signal that corresponds to coordinates (x + Δx + xₑ, y + Δy + yₑ) obtained by adding the correction amounts (xₑ, yₑ) to the target coordinates (x + Δx, y + Δy) to the galvano scanners 11 and 12. As a result of this, the laser beam L is properly projected to the original target irradiation position (x + Δx, y + Δy), and the hole 32 can be formed in the position (x + Δx, y + Δy).

After applying the laser processing for forming the plurality of holes 32 to a certain area 30 as a part of the region to be processed in the die 3, the control unit 52 inputs a control signal to the XY stage 2 to move the mount 4 supporting the die 3 in the X-axis direction and/or the Y-axis direction, and positions an unprocessed area 30 that is adjacent to the processed area 30 in the die 3 as a new area to be processed by the laser irradiation device 1. Then, the laser processing for forming the plurality of holes 32 is applied to the area 30. The laser processing and the transferring of the die 3 are repeated after that, so as to form the many holes 32 over the entire region to be processed in the die 3.

When a heated transparent resin material such as an acrylic is pressed against the die 3 for forming the light-guiding plate that is manufactured by using the laser processing machine 0 of this embodiment, the resin material fits into the holes 32 made in the die 3, and innumerable projections corresponding to the positions and shapes of the holes 32 are formed on the surface of the resin material, and thus the light-guiding plate 6 is brought to completion. The number of the projections on the light-guiding plate 6 per unit area is smaller at one end of the light-guiding plate 6 at which the light source is arranged, and gradually increases from one end toward the other end. The projections play a role of diffusing the luminous flux inputted into the light-guiding plate 6. A reflecting layer (not shown) is separately provided on the surface of the light-guiding plate 6 on which the projections are formed or on the back surface opposite thereof, so as to reflect the luminous flux to be output from the inside of the light-guiding plate 6 to the outside of the light-guiding plate 6.

According to this embodiment, the processing machine 0 is configured to include the processing device 1 capable of applying processing for forming the many holes 32 to the processing area as a part of the region to be processed in the workpiece, that is, the die 3, the transferring device 2 to relatively move the workpiece 3 with respect to the processing device 1 after the processing is applied to the certain area 30 in the region to be processed in the workpiece 3, and to position the unprocessed area 30 adjacent to the area 30 that is already processed as a new area to be processed by the processing device 1, the processing pattern storage unit 51 to store the information defining the arrangement positions 31 of the holes 32 formed by the processing device 1 in the region to be processed in the workpiece 3, and the control unit 52 to determine the target processing position of each of the holes 32 by adding the position correction amount of each hole 32 on a random basis to the position 31 of each hole 32 defined by the information stored in the processing pattern storage unit 51, and to give the instruction to the processing device 1 to form the hole 32 at the target processing position.

Even though the arrangement positions of the holes 32 that are stored in the processing pattern storage unit 51 have a regular pattern (for example, at the intersections of or in the squares of the lattice that is virtually set on the top surface of the die 3) according to this embodiment, the positions of the holes 32 that are actually formed in the workpiece 3 randomly vary from one hole 32 to another. Therefore, the displacement between the pattern of the holes 32 formed in the certain area 30 in the region to be processed in the workpiece 3 and the pattern of the holes 32 formed in the area 30 adjacent to the certain area 30 is less prominent, which makes it possible to avoid the problem in which a boundary between the adjacent processing areas 30 is made clear to the extent that the boundary is visible to the naked eye. Thus, it is possible to maintain the high quality of the light-guiding plate 6 as a finished product.

It should be noted that the present invention is not limited to the embodiment described in detail as above. According to the above-described embodiment, the die 3 is irradiated with the laser beam L to form the many holes 32, and the many projections for diffusing the light are formed on the surface of the light-guiding plate 6 by the holes 32 in the die 3. However, the light-guiding plate 6 may be manufactured by directly irradiating the material of the light-guiding plate 6 with the laser beam L to drill and form the many holes 32 for diffusing the light in the surface of the light-guiding plate 6.

The processing device for forming the holes 32 in the workpiece including the die 3 and others is not limited to the laser irradiation device 1. It is possible to employ a processing device having an aspect of making the holes 32 in the workpiece by a needle or the like.

It is needless to say that the workpiece is not limited to the die 3 for forming the light-guiding plate or the light-guiding plate.

Regarding to the concrete structures of the respective components, various modifications are possible without departing from the scope and spirit of this invention.

### INDUSTRIAL APPLICABILITY

The present invention may be used as a processing machine for manufacturing a die for a light-guiding plate and the like.

### REFERENCE SIGNS LIST

- 0: processing machine
- 1: processing device (laser irradiation device)
- 11, 12: galvano scanners
- 2: transferring device
- 3: workpiece (die)
- 32: holes
- 51: processing pattern storage unit
- 52: control unit
- 6: light-guiding plate
- L: laser beam

## Claims

1. A processing machine comprising:
a processing device capable of applying processing for forming many holes to a processing area as a part of a region to be processed in a workpiece;
a transferring device to relatively move the workpiece with respect to the processing device after the processing is applied to a certain area in the region to be processed in the workpiece, and to position an unprocessed area adjacent to the area that is already processed as a new area to be processed by the processing device;
a processing pattern storage unit to store information defining arrangement positions of the holes formed by the processing device in the region to be processed in the workpiece; and
a control unit to determine a target processing position of each of the holes by adding a position correction amount of each hole on a random basis to the position of each hole defined by the information stored in the processing pattern storage unit, and to give an instruction to the processing device to form the hole at the target processing position.

2. The processing machine according to claim 1,
wherein the processing device comprises a laser irradiation device to irradiate the position instructed by the control unit with a laser beam.

3. The processing machine according to claim 2,
wherein the processing device comprises a galvano scanner to change a direction of an optical axis of the projected laser beam.

4. The processing machine according to claim 1, claim 2 or claim 3,
wherein the region to be processed is set on one surface of the workpiece as a die, and the many holes are formed over the entire region to be processed, so as to manufacture the die for forming a light-guiding plate.

5. A die for forming a light-guiding plate manufactured by using a processing machine according to claim 4.

6. A light-guiding plate formed by using a die for forming a light-guiding plate manufactured by using a processing machine according to claim 4.
